# EUROPÄISCHE PATENTSCHRIFT

(11) **EP 3 369 554 B1**
(45) Veröffentlichungstag und Bekanntmachung des Hinweises auf die Patenterteilung: **03.06.2020**
(21) Anmeldenummer: 17159188.6
(22) Anmeldetag: 03.03.2017
(51) Int. Cl.: B29C 51/42, B29C 51/46, B29C 51/10

(54) **VERFAHREN ZUM AUSFORMEN VON NÄPFEN IN EINER ERWÄRMTEN FOLIENBAHN**
METHOD OF FORMING BLISTERS IN A HEATED FILM WEB
PROCÉDÉ DE FORMATION D'ÉCUELLES DANS UNE BANDE DE FILM CHAUFFÉE

(43) Veröffentlichungstag der Anmeldung: 05.09.2018
(73) Patentinhaber: Uhlmann Pac-Systeme GmbH & Co. KG, 88471 Laupheim (DE)
(72) Erfinder: GERTITSCHKE, Detlev, 88471 Laupheim (DE)
(74) Vertreter: Wächter, Jochen

(56) Entgegenhaltungen:
- DE-A1-102006 045 027
- DE-A1-102008 005 625
- US-A- 4 832 885
- US-A1- 2004 115 294

## Beschreibung

Die vorliegende Erfindung betrifft ein Verfahren zum Ausformen von Näpfen in einer erwärmten Folienbahn.

Derartige Verfahren werden beispielsweise in der pharmazeutischen Industrie und der Lebensmittelindustrie in Formstationen angewendet, die Teil einer Verpackungsmaschine sind. Vor dem Ausformen der Näpfe wird die Folienbahn zunächst mittels einer Heizvorrichtung vorgewärmt. In den erwärmten Abschnitt der Folienbahn werden danach mittels Formwerkzeugen die Näpfe geformt. In weiteren Schritten im Verpackungsprozess werden Produkte in die Näpfe eingeführt, die befüllte Blisterbahn wird dann meist versiegelt und einzelne versiegelte Blisterabschnitte werden aus der Blisterbahn ausgestanzt.

Bei den meisten Folienarten erfolgt die Formung der Näpfe mittels Druckluft. Vor der Beaufschlagung mit Druckluft kann durch Vorstreckstempel eine grobe Form der Näpfe vorgeformt werden.

Die Temperatur der Folienbahn ist eine kritische Größe beim Formvorgang. DE 10 2006 045 027 A1 beschreibt in diesem Zusammenhang die Verwendung eines Infrarotsensors zur Messung der Temperatur eines Folienabschnitts. Der Infrarotsensor ist seitlich neben einem Formwerkzeug angeordnet. Eine Steuerung regelt auf Basis der gemessenen Temperatur die Heizvorrichtung derart, dass der erwärmte Folienabschnitt eine möglichst konstante Temperatur hat. DE 10 2008 005625 A1 schlägt dagegen vor, einen Temperatursensor in einem Vordehner in einem Formwerkzeug einer Thermoformvorrichtung zu integrieren und die Temperatur am unteren Ende einer Formkavität zu messen. Aus US 2004/115294 A1 ist es bekannt, in den Formausnehmungen einer Einspritzgussvorrichtung Temperatursensoren anzuordnen. Und schließlich beschreibt US 4 832 885 A eine Thermoformvorrichtung, bei der zwischen einem oberen und einem unteren Formwerkzeug ein Sensor zur Messung der Ausdehnung einer in dem Formwerkzeug zu verarbeitenden Schaumstoffbahn angeordnet ist.

Es ist die Aufgabe der vorliegenden Erfindung, ein Verfahren zum Ausformen von Näpfen in einer erwärmten Folienbahn anzugeben, bei dem die Produktqualität verbessert und die Ausschussrate verringert ist.

Diese Aufgabe wird durch die Merkmale des Anspruchs 1 gelöst.

Erfindungsgemäß weist das Verfahren zum Ausformen von Näpfen in einer Folienbahn, die taktweise in einer Förderrichtung bewegt wird, folgende Schritte auf:
a) Bereitstellen einer Formvorrichtung mit einem ersten Formwerkzeug und einem zweiten Formwerkzeug, das eine Vielzahl von Formausnehmungen aufweist, wobei das erste und das zweite Formwerkzeug in einer Formposition einen Abschnitt der Folienbahn zwischen sich einspannen, wobei die Formvorrichtung weiterhin eine Drucklufteinrichtung aufweist, die zum Ausformen der Näpfe betätigt wird, wenn das erste Formwerkzeug und das zweite Formwerkzeug in der Formposition angeordnet sind,
b) Bereitstellen einer Vielzahl von Temperatursensoren, die in dem ersten oder dem zweiten Formwerkzeug integriert sind, und
c) Bereitstellen einer Heizvorrichtung mit einer Vielzahl von Heizelementen zum Erwärmen der Folienbahn, wobei die Heizvorrichtung bezüglich der Förderrichtung stromaufwärts von der Formvorrichtung angeordnet ist,
d) Anordnen eines Abschnitts der Folienbahn im Bereich der Heizvorrichtung und Betätigen der Heizvorrichtung zum Erwärmen des Abschnitts der Folienbahn,
e) Anordnen des erwärmten Abschnitts der Folienbahn in der Formvorrichtung zwischen dem ersten und dem zweiten Formwerkzeug und Betätigen der Formvorrichtung, um das erste Formwerkzeug und das zweite Formwerkzeug in der Formposition anzuordnen,
f) Messen unter Verwendung der Vielzahl von Temperatursensoren einer entsprechenden Vielzahl von Ist-Temperaturwerten des Abschnitts der Folienbahn und Vergleichen der Ist-Temperaturwerte mit einem Soll-Temperaturwert, wobei die Messung der Ist-Temperaturwerte erfolgt, wenn das erste Formwerkzeug und das zweite Formwerkzeug in der Formposition angeordnet sind, und
g) Nachregeln der Heizleistung mindestens eines der Vielzahl von Heizelementen, wenn in dem Schritt f) eine Abweichung eines oder mehrerer gemessener Ist-Temperaturwerte vom Soll-Temperaturwert festgestellt wurde.

Es hat sich gezeigt, dass für das Erreichen einer gleichmäßigen Wanddickenverteilung der tiefgezogenen Näpfe eine gleichmäßige Temperaturverteilung in dem entsprechenden Abschnitt der Folienbahn beim Formvorgang von großer Bedeutung ist. Die Ursachen für eine ungleichmäßige Temperaturverteilung sind vielfältig. Eine ungleichmäßige Temperaturverteilung der Folienbahn kann sich z.B. ergeben, wenn das vordere Ende des erwärmten Folienabschnitts, welches die Heizvorrichtung zuerst verlässt, stärker abkühlt als das hintere Ende des erwärmten Folienabschnitts, welches die Heizvorrichtung als letztes verlässt. Eine weitere Ursache für eine ungleichmäßige Temperaturverteilung kann darin liegen, dass die Abstände der Heizelemente zu dem zu erwärmenden Folienabschnitt nicht ganz gleichmäßig sind. Bei dem erfindungsgemäßen Verfahren arbeiten die Temperatursensoren mit der Heizeinrichtung in vorteilhafter Weise derart zusammen, dass eine ungleichmäßige Temperaturverteilung bei laufendem Betrieb der Formvorrichtung bereits während des Formvorgangs festgestellt werden kann. Damit werden die für den Formprozess relevanten Temperaturverteilungsdaten berücksichtigt. Für nachfolgende Abschnitte der Folienbahn kann die Heizleistung der Heizvorrichtung dann unmittelbar so angepasst werden, dass eine Korrektur der Temperaturverteilung herbeigeführt wird.

Mit weiterem besonderen Vorteil werden die Schritte d) bis g) mit jeweils einem weiteren Abschnitt der Folienbahn so oft wiederholt, bis in dem Schritt f) festgestellt wird, dass alle Temperatursensoren den Soll-Temperaturwert messen.

Erfolgt das Nachregeln der Heizleistung des mindestens einen der Vielzahl von Heizelementen automatisch, können Schwankungen der Temperatur fortlaufend während des Betriebs von selbst korrigiert werden. Dieser Arbeitsschritt benötigt kein Bedienpersonal.

In weiterer Ausgestaltung wird der Abschnitt der Folienbahn abgekühlt, wenn das erste und das zweite Formwerkzeug in der Formposition angeordnet sind. Die Abkühlung des erwärmten Folienabschnitts auf Werkzeugtemperatur nach dem Formvorgang noch in der Formposition der Formwerkzeuge verhindert, dass nach der Freigabe der Folienbahn durch die Formvorrichtung eine Schrumpfung der Folienbahn aufgrund übermäßiger anschließender Abkühlung der Folienbahn auftritt.

Vorzugsweise erfolgt nach dem Anordnen des ersten und des zweiten Formwerkzeugs in der Formposition zunächst die Messung der Ist-Temperaturwerte durch die Vielzahl von Temperatursensoren und erst danach wird die Drucklufteinrichtung betätigt.

Bei einer bevorzugten Ausgestaltung umfasst die Heizvorrichtung eine erste und eine zweite Heizplatte, wobei die Folienbahn zwischen der ersten Heizplatte und der zweiten Heizplatte in Förderrichtung geführt wird. Damit ist es möglich, einen Folienabschnitt von zwei Seiten gezielt zu erhitzen, sodass eine Korrektur der Temperatur besonders rasch erfolgen kann.

Es ist weiterhin bevorzugt, dass jedem Temperatursensor mindestens ein Heizelement oder eine Gruppe von Heizelementen zugeordnet ist, wobei jeder Temperatursensor in einem Bereich des Formwerkzeugs angeordnet ist, dessen relative Lage innerhalb des Formwerkzeugs im Wesentlichen der relativen Lage desjenigen Bereichs innerhalb der ersten und/oder zweiten Heizplatte entspricht, in dem das mindestens eine zugeordnete Heizelement oder die zugeordnete Gruppe von Heizelementen angeordnet ist.

In vorteilhafter Weise ist die Vielzahl von Temperatursensoren in einer Vielzahl von Ausnehmungen in dem ersten oder dem zweiten Formwerkzeug angeordnet. Dabei ist die Vielzahl von Ausnehmungen in einer Fläche des ersten oder des zweiten Formwerkzeugs ausgebildet, die dem jeweils anderen Formwerkzeug gegenüberliegt. In dieser Einbausituation sind die Temperatursensoren in die Lage versetzt, die Ist-Temperatur des Abschnitts der Folienbahn unmittelbar und präzise zu messen, wenn das erste und das zweite Formwerkzeug in der Formposition angeordnet sind. Daher bildet die gemessene Ist-Temperatur während der Formgebung durch die Formvorrichtung auch die tatsächlich vorherrschenden Temperaturverhältnisse in der Folienbahn ab.

Weiterhin ist bevorzugt jeder der Vielzahl von Temperatursensoren als ein berührungslos messender Temperatursensor ausgeführt. Hierdurch kann die Ist-Temperatur bereits gemessen werden, noch bevor das erste und das zweite Formwerkzeug in der Formposition angeordnet wurden.

Bei einer weiteren Ausgestaltung sind die Temperatursensoren in den seitlichen Randabschnitten des ersten oder zweiten Formwerkzeugs angeordnet. Die Ist-Temperatur wird dann nur in den Randabschnitten gemessen, die am häufigsten von einem Temperaturabfall betroffen sind. Dort stören die Temperatursensoren auch nicht den Formvorgang. Alternativ können die Temperatursensoren auch nur in den Eckbereichen des ersten oder zweiten Formwerkzeugs angeordnet sein.

Bevorzugt wird aus dem Soll-Temperaturwert und den gemessenen Ist-Temperaturwerten ein Abweichungsmuster abgeleitet und ein Nachregeln der Heizleistung mindestens eines der Vielzahl von Heizelementen erfolgt unter Verwendung von in einer Datenbank abgelegten Informationen zur Behebung des Abweichungsmusters. Dies setzt voraus, dass vorher eine Kalibrierung durchgeführt wurde, bei der diese Abweichungsmuster bereits spezifiziert und die jeweiligen Informationen zur Behebung ermittelt wurden. Für wiederkehrende Abweichungsmuster sind dann spezielle Steuerungsinformationen zur Ansteuerung der Heizelemente vorhanden.

Schließlich ergibt sich ein weiterer Vorteil, wenn
- unter Verwendung der Vielzahl von Temperatursensoren ein zeitlicher Ist-Temperaturverlauf des Abkühlvorgangs des erwärmten Abschnitts der Folie ermittelt wird, wenn das erste Formwerkzeug und das zweite Formwerkzeug in der Formposition angeordnet sind,
- als letzter Ist-Temperaturwert des Ist-Temperaturverlaufs derjenige Temperaturwert ermittelt wird, der zum Zeitpunkt des Freigebens des Abschnitts der Folienbahn durch das erste Formwerkzeug und das zweite Formwerkzeug gemessen wird, und,
- festgestellt wird, dass, wenn der letzte gemessene Ist-Temperaturwert höher als ein vorbestimmter Grenztemperaturwert ist, der Abschnitt der Folienbahn zu früh durch das erste Formwerkzeug und das zweite Formwerkzeug freigegeben wurde.

Bei dieser Vorgehensweise wird eine Kontrolle der Arbeitsweise der Formwerkzeuge selbst und somit eine erweiterte Kontrolle der Produktqualität erhalten. Werden die Formwerkzeuge zu früh geöffnet, weist der Folienabschnitt bei der Freigabe durch die Formwerkzeuge eine zu hohe Resttemperatur auf, die über dem maximal zulässigen Grenztemperaturwert liegt, bei dem noch eine akzeptierbare Produktqualität zu erwarten ist. Bei einer zu hohen Resttemperatur erfolgt die weitere Abkühlung in einem nicht eingespannten Zustand der Folienbahn, was eine ungewünschte Schrumpfung des Folienmaterials des Folienbahnabschnitts zur Folge hat.
- Fig. 1: ist eine schematische Querschnittsansicht einer Vorrichtung zur Durchführung des erfindungsgemäßen Verfahrens, die den prinzipiellen Aufbau der Formvorrichtung und eine erste Phase des erfindungsgemäßen Verfahrens zeigt;
- Fig. 2: ist eine schematische Querschnittsansicht der Vorrichtung aus Fig. 1, in der eine zweite Phase des erfindungsgemäßen Verfahrens gezeigt ist;
- Fig. 3: ist eine schematische Seitenansicht der Vorrichtung aus Fig. 1, in der eine dritte Phase des erfindungsgemäßen Verfahrens gezeigt ist;
- Fig. 4: ist eine schematische Draufsicht auf das untere Formwerkzeug und die untere Heizplatte, in der eine mögliche Anordnung der Temperatursensoren und der Heizelemente gezeigt ist;
- Fig. 5: ist eine schematische Kennliniendarstellung von gemessenen Ist-Temperaturverläufen eines berührungslosen Temperatursensors für drei verschiedene Betriebssituationen, die beim Formvorgang auftreten können; und
- Fig. 6: ist eine schematische Kennliniendarstellung von gemessenen Ist-Temperaturverläufen eines Berührungstemperatursensors für drei verschiedene Betriebssituationen, die beim Formvorgang auftreten können.

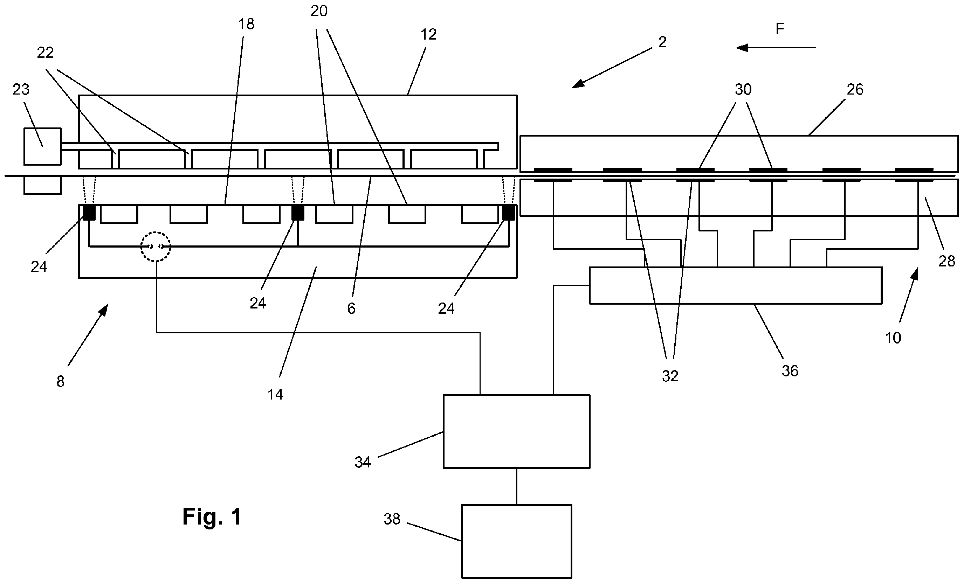

Fig. 1 bis 3 zeigen den prinzipiellen Aufbau einer Formstation 2 zum Formen oder Tiefziehen von Näpfen 4 in einer Folienbahn 6, die zur Durchführung des erfindungsgemäßen Verfahrens geeignet ist. Die Formstation 2 umfasst im Wesentlichen eine Formvorrichtung 8 und eine der Formvorrichtung 8 vorgelagerte Heizvorrichtung 10.

Die Formvorrichtung 8 umfasst ein erstes Formwerkzeug 12 und ein zweites Formwerkzeug 14, die in Fig. 1 vertikal voneinander beabstandet, d.h. in geöffneter Stellung, angeordnet sind. Zwischen dem ersten Formwerkzeug 12 und dem zweiten Formwerkzeug 14 ist die Folienbahn 6 beabstandet vom ersten Formwerkzeug 12 und zweiten Formwerkzeug 14 angeordnet. Im vorliegenden Fall ist das erste Formwerkzeug 12 das obere Formwerkzeug und das zweite Formwerkzeug 14 das untere Formwerkzeug, es ist aber auch eine umgekehrte Konfiguration denkbar. Wie in Fig. 1 weiter zu sehen, sind das erste Formwerkzeug 12 und das zweite Formwerkzeug 14 auch von der Folienbahn 6 beabstandet angeordnet. Das erste und zweite Formwerkzeug 12, 14 sind mittels nicht gezeigter Antriebe in einer Schließrichtung hin zur dazwischen liegenden Folienbahn 6 verstellbar. Die Folienbahn wird üblicherweise getaktet in einer Förderrichtung F geführt.

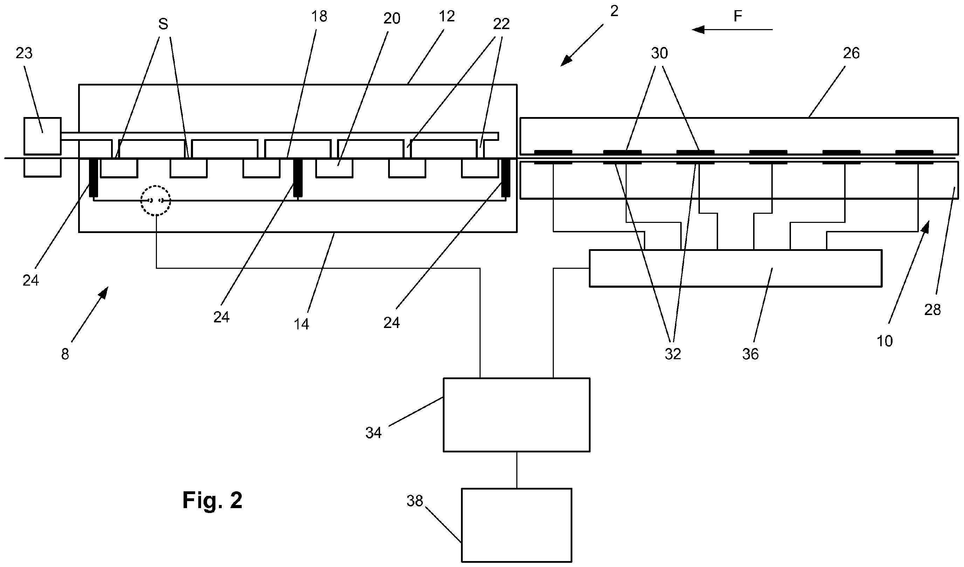

Wie in Fig. 1 weiter zu sehen, umfasst das zweite Formwerkzeug 14 eine Oberfläche 18, in der eine Vielzahl von Formausnehmungen 20 ausgebildet ist. Die Formausnehmungen 20 haben im Wesentlichen die äußere Form eines zu formenden Napfes. In der Seitenansicht von Fig. 1 sind insgesamt sechs Formausnehmungen 20 zu sehen. Das erste Formwerkzeug 12 wiederum umfasst mehrere Blasöffnungen 22, die mit einer Drucklufteinrichtung 23 zum Zuführen von Druckluft verbunden sind. Die Blasöffnungen 22 und die Formausnehmungen 20 sind so angeordnet, dass in der geschlossenen Formposition der Formwerkzeuge 12, 14, wenn die Formwerkzeuge 12, 14 einen dazwischen liegenden Abschnitt der Folienbahn 6 zwischen sich einschließen, jede Blasöffnung 22 einer Formausnehmung 20 zugeordnet ist und mit ihr ausgerichtet ist. Die Formposition der Formwerkzeuge 12, 14 ist in Fig. 2 gezeigt. Die Blasöffnungen 22 können auch in Vorstreckstempeln (nicht dargestellt) des ersten Formwerkzeugs 12 integriert sein, die in der Formposition in die Formausnehmungen 20 hineinragen.

Vorliegend werden das erste Formwerkzeug 12 und das zweite Formwerkzeug 14 relativ zueinander bewegt. Ebenso ist es aber möglich, dass nur das erste Formwerkzeug 12 in Richtung des zweiten Formwerkzeugs 14 oder lediglich das zweite Formwerkzeug 14 in Richtung des ersten Formwerkzeugs 12 bewegt wird.

In der Formposition werden in den Bereichen der Formausnehmungen 20 in dem dazwischen fixierten Abschnitt der Folienbahn 6 entsprechende Streckzonen S gebildet (Fig. 2), in denen die Verformung des Abschnitts der Folienbahn 6 durch die aus den Blasöffnungen 22 austretende Druckluft erfolgen kann.

Temperatursensoren 24 sind, wie in Fig. 1 dargestellt, in dem zweiten Formwerkzeug 14 integriert bzw. in jeweiligen Aufnahmen für die Temperatursensoren in dem zweiten Formwerkzeug 14 aufgenommen. Die Temperatursensoren 24 sind der Folienbahn 6 und dem ersten Formwerkzeug 12 zugewandt. Es wäre auch möglich, die Temperatursensoren 24 im ersten Formwerkzeug 12 anzuordnen. Es ist bevorzugt, wenn die Temperatursensoren 24 bündig mit der jeweiligen Oberfläche des Formwerkzeugs 12, 14 abschließen.

Bei den Temperatursensoren 24 handelt es sich vorzugsweise um berührungslose Temperatursensoren, beispielsweise IR-Temperatursensoren. Das Funktionsprinzip von IR-Temperatursensoren basiert auf der Erfassung der von dem Messobjekt ausgesendeten Infrarotstrahlen, wobei die Intensität Rückschlüsse auf die Temperatur des Messobjekts ermöglicht. Vorliegend ist der zwischen den Formwerkzeugen 12, 14 befindliche Abschnitt der Folienbahn 6 das Messobjekt.

Die der Formvorrichtung 8 bezüglich der Förderrichtung F vorgelagerte Heizvorrichtung 10 besteht bevorzugt aus zwei Heizplatten, einer ersten oder oberen Heizplatte 26 und einer zweiten oder unteren Heizplatte 28. Die erste und die zweite Heizplatte 26, 28 sind in Fig. 1 parallel zueinander und voneinander beabstandet angeordnet. Dazwischen ist die Folienbahn 6 angeordnet. Des Weiteren umfasst die erste Heizplatte 26 eine Vielzahl von Heizelementen 30 und die zweite Heizplatte 28 umfasst eine Vielzahl von Heizelementen 32. Jedes Heizelement 30, 32 ist an der der Folienbahn 6 zugewandten Seite der ersten bzw. der zweiten Heizplatte 26, 28 angeordnet. Die Vielzahl von Heizelementen 30, 32 bildet eine Matrix von Heizelementen 30, 32 in Zeilen- und Reihenanordnung. Vorzugsweise sind die Heizelemente 30, 32 elektrisch betrieben. Die Heizleistung der Vielzahl von Heizelementen 30, 32 ist individuell steuerbar. Die Art, die Abmessungen, die Anordnung und andere Spezifikationen der Heizelemente 30, 32 sind vom Fachmann frei wählbar. Es ist auch möglich, dass Gruppen von Heizelementen 30, 32 gemeinsam ansteuerbar sind.

Die Temperatursensoren 24 sind über eine Steuerungseinrichtung 34 und vorzugsweise über eine Multiplexer-Einrichtung 36 mit der Heizvorrichtung 10 verbunden. Die Messwerte der Temperatursensoren 24 werden an die Steuerungseinrichtung 34 übertragen. In der Steuerungseinrichtung 34 werden auf Basis der Messwerte Steuerungssignale zum individuellen Anpassen der Heizleistung über die Multiplexer-Einrichtung 36 an die Heizelemente 30, 32 übertragen. Vorzugsweise geschieht dies in einem Regelkreis. Es ist auch denkbar, dass zusätzlich eine Interaktionseinrichtung 38 bereitgestellt ist, sodass eine Bedienperson auf Basis von angezeigten Messwerten Steuerungsprozesse für die Heizvorrichtung 10 manuell einleitet. Ebenfalls ist es denkbar, dass im Bereich der Heizelemente 30, 32 weitere Temperatursensoren angeordnet sind, deren Messwerte zur schnellen und genauen Regelung verwendet werden.

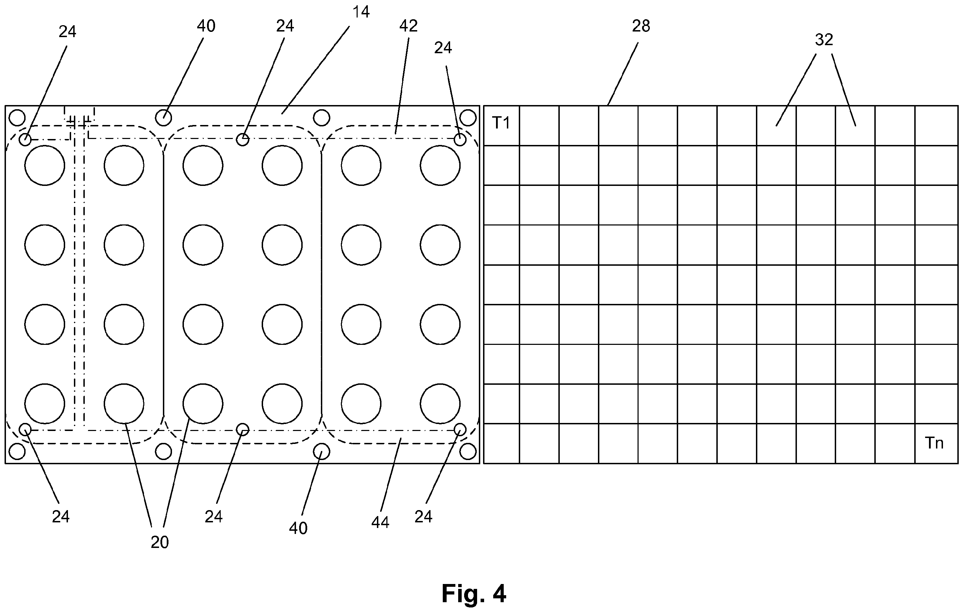

Bezugnehmend auf Fig. 4 ist schließlich eine schematische Draufsicht auf das zweite Formwerkzeug 14 (mit angedeuteter Darstellung der Formbereiche) und auf die zweite Heizplatte 28 gezeigt. In der Draufsicht sind die speziellen Anordnungen der Temperatursensoren 24 und der Heizelemente 32 gezeigt. Das zweite Formwerkzeug 14 weist sechs Temperatursensoren 24 auf, die in seitlichen Randabschnitten 42, 44 des zweiten Formwerkzeugs 14 vorgehen sind. Die Heizelemente 32 (beliebige Anzahl Tn) sind in einem Raster in Zeilen- und Reihenanordnung angeordnet. Weiterhin entspricht der Flächenbereich des zweiten Formwerkzeugs 14 in Form und Größe in etwa dem Flächenbereich der zweiten Heizplatte 28. Mit dem Bezugszeichen 40 sind schließlich Aushebestifte für die geformte Folienbahn 6 bezeichnet.

Im Folgenden werden die einzelnen Phasen einer möglichen Ausgestaltung des erfindungsgemäßen Verfahrens anhand der Fig. 1 bis 3 näher erläutert.

Wie in Fig. 1 zu sehen, wurde in der ersten Phase ein Abschnitt einer durchgehenden Folienbahn 6 zwischen der ersten und der zweiten Heizplatte 26, 28 angeordnet und durch die Heizvorrichtung 10 auf eine Soll-Temperatur T_{SOLL} vorerwärmt. Ein weiterer, bereits erwärmter Abschnitt der Folienbahn 6 ist in Förderrichtung F stromabwärts von der Heizvorrichtung 10 zwischen dem ersten Formwerkzeug 12 und dem zweiten Formwerkzeug 14 angeordnet. Sowohl das erste Formwerkzeug 12 als auch das zweite Formwerkzeug 14 sind von dem vorerwärmten Abschnitt der Folienbahn 6 beabstandet. Wie zu sehen, liegen die berührungslosen Temperatursensoren 24 dem vorerwärmten Folienabschnitt direkt gegenüber und sind damit bereits in der Lage, einen Ist-Temperaturwert des vorerwärmten Abschnitts der Folienbahn 6 zu messen.

Wie in Fig. 2 zu sehen, befinden sich in der zweiten Phase das erste und zweite Formwerkzeug 12, 14 in der Formposition, in der der vorerwärmte Abschnitt der Folienbahn 6 zwischen den Formwerkzeugen 12, 14 eingeschlossen ist. Hierbei wird der erwärmte Abschnitt der Folienbahn 6 zwischen den Formwerkzeugen 12, 14 geklemmt. In der Formposition erfolgt nunmehr die Beaufschlagung der Blasöffnungen 22 mit Druckluft, um in den Streckzonen S die Folienbahn 6 an die Wände der Formausnehmungen 20 zu drängen. Gleichzeitig bewirkt die geringere Temperatur der Formwerkzeuge 12, 14 eine Abkühlung des geformten Abschnitts der Folienbahn 6. Falls nötig, können hierfür in einem oder in beiden Formwerkzeugen 12, 14 Kühleinrichtungen vorgesehen sein. Während des gesamten Formprozesses werden Ist-Temperaturwerte des Abschnitts der Folienbahn 6 durch die Temperatursensoren 24 ermittelt. Gleichzeitig wird der nächste Abschnitt der Folienbahn in der Heizvorrichtung 10 weiter erwärmt.

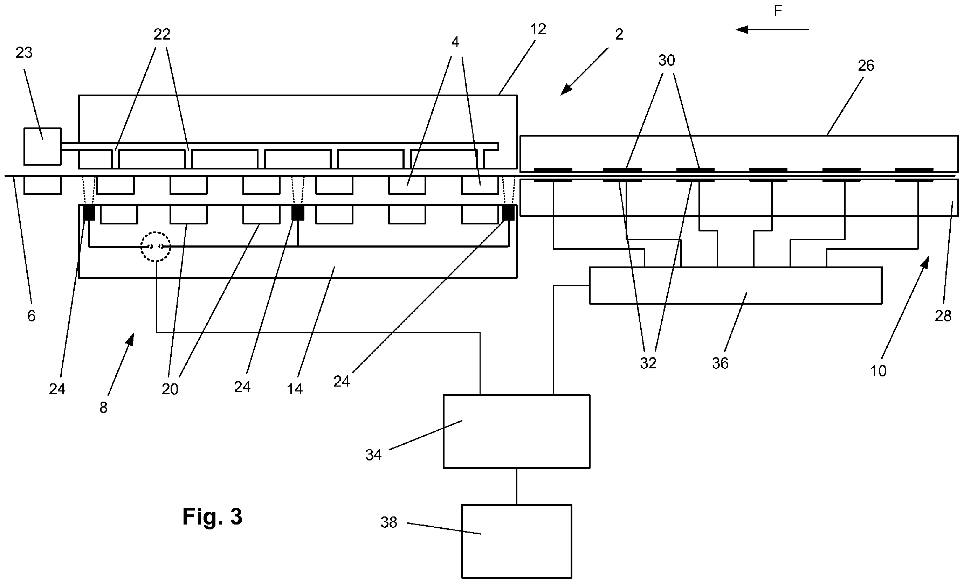

Wie in Fig. 3 zu sehen, sind in der dritten Phase das erste Formwerkzeug 12 das zweite Formwerkzeug 14 wieder voneinander beabstandet, sodass der geformte Abschnitt der Folienbahn 6 freigegeben ist. Mit dem nächsten Takt der Vorschubbewegung gelangt der nächste vorerwärmte Abschnitt der Folienbahn 6 in die Formvorrichtung 8, und der geformte Abschnitt wird aus der Formvorrichtung 8 bewegt und der weiteren Bearbeitung zugeführt. Damit ist wieder ein Zustand wie in Fig. 1 erreicht, und der Zyklus kann wieder beginnen.

Die von den Temperatursensoren 24 gemessenen Messdaten werden direkt an die Steuereinrichtung 34 weitergegeben und dort verarbeitet oder alternativ über eine Interaktionseinrichtung 38 angezeigt. Auf Grundlage der gemessenen Ist-Temperaturwerte ist es möglich, die Heizvorrichtung 10 so anzusteuern, dass die Heizleistung bestimmter Heizelemente 30, 32 zur Erreichung einer einheitlich konstanten Temperatur eines nachfolgenden Abschnitts der Folienbahn 6 entsprechend angepasst wird.

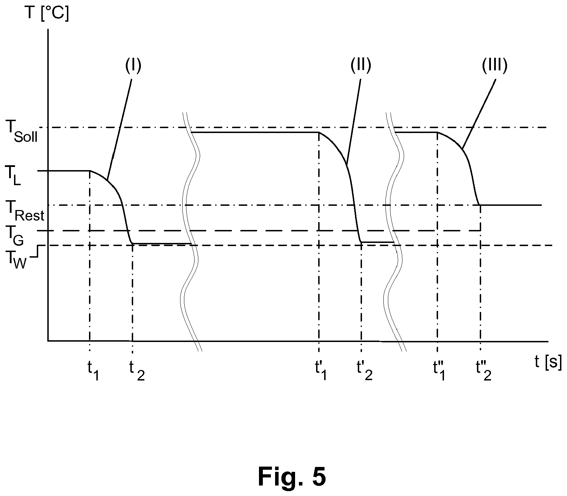

In Fig. 5 sind mögliche Temperaturverläufe bei Verwendung eines berührungslosen Temperatursensors 24 dargestellt. Die dargestellten drei Kennlinien (I)-(III) sind Verläufe der gemessenen Temperaturwerte über die Zeit t, wobei jeweils Temperaturverläufe des vorerwärmten Abschnitts der Folienbahn 6 in der Formvorrichtung vor dem Schließen, in der geschlossenen Formposition (von t₁ bis t₂, von t₁' bis t₂' und von t₁" bis t₂") und nach dem Öffnen der Formwerkzeuge 12, 14 dargestellt sind. Der berührungslose Temperatursensor 24 ist in der Lage, die Folientemperatur auch vor dem Schließen der Formwerkzeuge 12, 14 (also vor t₁, t₁' und t₁"), sowie nach dem Öffnen der Formwerkzeuge 12, 14 (nach t₂, t₂' und t₂") korrekt zu erfassen. Somit entspricht die gemessene Temperatur T zu jedem Zeitpunkt der Ist-Temperatur T_{IST} der Folie.

Die Kennlinie (I) zeigt den Fall, bei dem der gemessene Temperaturwert T des Abschnitts der Folienbahn bei T_{L} zu niedrig ist, also unterhalb der geforderten Soll-Temperatur T_{SOLL} der Folie liegt. In der Formposition der Formwerkzeuge 12, 14 kühlt die Folientemperatur zwischen dem Zeitpunkt t₁ (Schließen der Formwerkzeuge) und dem Zeitpunkt t₂ (Öffnen der Formwerkzeuge) ausgehend von der zu niedrigen Temperatur T_{L} bis in etwa auf die Werkzeugtemperatur T_{W} ab. Nach dem Öffnen der Formwerkzeuge 12, 14 bei t₂ misst der Temperatursensor weiterhin die Ist-Temperatur T_{IST} der Folie, die in etwa konstant der Werkzeugtemperatur T_{W} entspricht, bis der geformte Abschnitt der Folienbahn 6 aus der Formvorrichtung 8 bewegt wird und ein weiterer vorerwärmter Abschnitt der Folienbahn 6 in der Formvorrichtung 8 angeordnet wird. Im Fall der Kennlinie (I) ist ein Nachregeln der Heizleistung der entsprechenden Heizelemente 30, 32 der Heizvorrichtung 10 erforderlich.

Die Kennlinie (II) zeigt den Fall, bei dem der gemessene Temperaturwert T des in der Formvorrichtung 8 angeordneten Abschnitts der Folienbahn 6 die Soll-Temperatur T_{SOLL} in etwa erreicht hat. In der Formposition der Formwerkzeuge 12, 14 kühlt die Ist-Temperatur T_{IST} der Folie ausgehend von der Soll-Temperatur T_{SOLL} bis in etwa auf die Werkzeugtemperatur T_{W} ab. Danach ist der Ablauf wie zu Kennlinie (I) beschrieben. Im Fall der Kennlinie (II) ist ein Nachregeln der Heizleistung der Heizvorrichtung 10 nicht erforderlich.

Die Kennlinie (III) zeigt einen Fall, bei dem die gemessene Temperatur T des in der Formvorrichtung 8 angeordneten Abschnitts der Folienbahn 6 die Soll-Temperatur T_{SOLL} in etwa erreicht hat. Jedoch wurden bei t₂" die Formwerkzeuge zu früh geöffnet, weshalb in der Formposition der Formwerkzeuge 8 die Folientemperatur ausgehend von der Soll-Temperatur T_{SOLL} lediglich bis auf eine Resttemperatur T_{REST} abkühlen konnte. Diese Resttemperatur T_{REST} liegt über einem festgelegten Grenztemperaturwert T_{G} und somit in einem Bereich, in dem ein weiteres Abkühlen der Folienbahn 6 erfolgen wird. Bei einer solchen Resttemperatur T_{REST} erfolgt die weitere Abkühlung in einem nicht eingespannten Zustand der Folienbahn 6, was eine ungewünschte Schrumpfung des Folienmaterials des Folienbahnabschnitts zur Folge hat. Im Fall der Kennlinie (III) ist somit zwar keine Änderung an den Einstellungen der Heizvorrichtung 10 vorzunehmen, aber es liegt ein Indiz vor, dass der geformte Folienabschnitt aussortiert und die Schließzeit der Formwerkzeuge 12, 14 überprüft werden sollte.

Berührungslose IR-Temperatursensoren sind für den Einbau in die Formwerkzeuge 12, 14 besonders geeignet. Ein wesentlicher Vorteil besteht darin, dass mit dem IR-Temperatursensor bereits dann, wenn der vorerwärmte Abschnitt der Folienbahn 6 in der Formvorrichtung 8 angeordnet ist, aber die Formwerkzeuge 12, 14 noch nicht in die Formposition bewegt wurden, eine gute Erfassung der Ist-Temperatur T_{IST} des Abschnitts der Folienbahn 6 erfolgt.

Es gibt darüber hinaus auch die Möglichkeit, anstelle der berührungslosen Temperatursensoren sogenannte Berührungstemperatursensoren oder Berührungstemperaturfühler zu verwenden. Hierbei ist zu beachten, dass die Messung der Ist-Temperatur T_{IST} des Abschnitts der Folienbahn nur in der Formposition der Formwerkzeuge 12, 14 erfolgen kann.

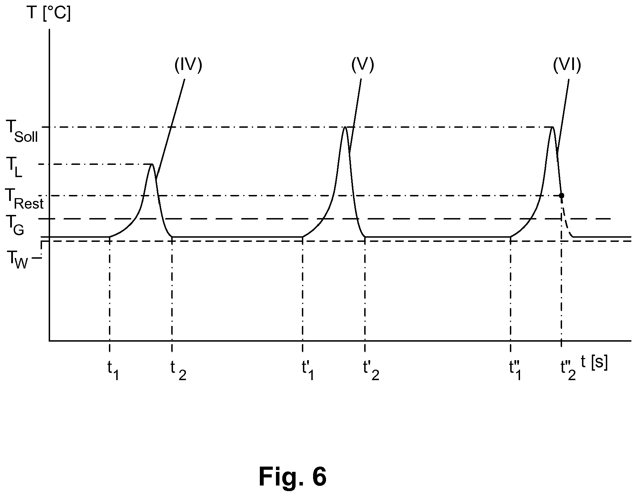

In Fig. 6 sind mögliche Temperaturverläufe bei Verwendung von Berührungstemperatursensoren dargestellt. Fig. 6 entspricht vom Aufbau Fig. 5.

In Kennlinie (IV) ist ein Fall dargestellt, bei dem der Berührungstemperatursensor vor dem Schließen der Formwerkzeuge bei t₁ aufgrund seiner Anordnung im Formwerkzeug 12, 14 zunächst die Werkzeugtemperatur T_{W} misst. Sobald die Formwerkzeuge bei t₁ geschlossen sind, misst der Temperatursensor 24 aufgrund des von ihm berührten erwärmten Abschnitts der Folienbahn 6 eine kontinuierlich steigende Temperatur T, bis der vom Temperatursensor 24 erkannte Temperaturwert T bei einem Scheitelpunkt schließlich der Ist-Temperatur T_{IST} des Abschnitts der Folienbahn 6 entspricht. Die Ist-Temperatur T_{IST} entspricht jedoch nicht der Soll-Temperatur T_{SOLL}, sondern dem darunter liegenden Temperaturwert T_{L}. Mit anderen Worten wurde die für ein korrektes Formen der Näpfe erforderliche Soll-Temperatur T_{SOLL} nicht erreicht. Anschließend misst der Sensor aufgrund der einsetzenden Kühlung durch die Formwerkzeuge 12, 14 einen kontinuierlich abfallenden Temperaturwert T. Beim Öffnen der Formwerkzeuge zum Zeitpunkt t₂ misst der Sensor dann wieder die Werkzeugtemperatur T_{W}. Im Fall der Kennlinie (IV) ist ein Nachregeln der Heizleistung der entsprechenden Heizelemente 30, 32 der Heizvorrichtung 10 erforderlich.

Die Kennlinie (V) zeigt den Fall entsprechend Kennlinie (V), wobei aber der vom Temperatursensor 24 gemessene Temperaturwert T an seinem höchsten Punkt in etwa der Soll-Temperatur T_{SOLL}. entspricht. Im Fall der Kennlinie (V) ist ein Nachregeln der Heizvorrichtung 10 nicht erforderlich.

Im Fall der Kennlinie (VI) ist der Verlauf zunächst wie bei Kennlinie (V), jedoch wurden die Formwerkzeuge 12, 14 während des Abkühlens der Folie zum Zeitpunkt t₂" zu früh geöffnet, weshalb in der Formposition der Formwerkzeuge 12, 14 die Temperatur des Abschnitts der Folienbahn ausgehend von der Soll-Temperatur T_{SOLL} lediglich bis auf eine Resttemperatur T_{REST} abkühlen konnte, die wie bei Kennlinie (III) auf Fig. 5 über einem festgelegten Grenztemperaturwert T_{G} liegt. Im Fall der Kennlinie (VI) ist somit zwar keine Änderung an den Einstellungen der Heizvorrichtung 10 vorzunehmen, aber es liegt ein Indiz vor, dass der geformte Folienabschnitt aussortiert und die Schließzeit der Formwerkzeuge 12, 14 überprüft werden sollte.

Bislang wurde die Erfindung mit zwei Heizplatten 26, 28 beschrieben. Ebenso können die Heizelemente 30, 32 auch nur auf einer Seite der Folienbahn 6 angeordnet sein. Neben der Anordnung in einer Heizplatte können die einzelnen Heizelemente 30, 32 auch anderweitig angeordnet sein.

Ebenso wurde die Erfindung bislang beschrieben unter Verwendung einer Anzahl von Blasöffnungen 22 im ersten Formwerkzeug 12, die der Anzahl von Formausnehmungen 20 im zweiten Formwerkzeug 14 entspricht. Es ist aber auch möglich, dass die beiden Formwerkzeuge 12, 14 die Folienbahn 6 in der Formposition nur an den Rändern einspannen und die Druckluft über nur einen Zugang und eine Luftkammer auf den ganzen eingespannten Folienabschnitt zur gleichzeitigen Bildung aller Näpfe appliziert wird.

## Patentansprüche

1. Verfahren zum Ausformen von Näpfen (4) in einer Folienbahn (6), die taktweise in einer Förderrichtung (F) bewegt wird, wobei das Verfahren folgende Schritte aufweist:
a) Bereitstellen einer Formvorrichtung (8) mit einem ersten Formwerkzeug (12) und einem zweiten Formwerkzeug (14), das eine Vielzahl von Formausnehmungen (20) aufweist, wobei das erste und das zweite Formwerkzeug (12, 14) in einer Formposition einen Abschnitt der Folienbahn (6) zwischen sich einspannen, wobei die Formvorrichtung (8) weiterhin eine Drucklufteinrichtung (23) aufweist, die zum Ausformen der Näpfe (4) betätigt wird, wenn das erste Formwerkzeug (12) und das zweite Formwerkzeug (14) in der Formposition angeordnet sind,
b) Bereitstellen einer Vielzahl von Temperatursensoren (24), die in dem ersten oder dem zweiten Formwerkzeug (12, 14) integriert sind,
c) Bereitstellen einer Heizvorrichtung (10) mit einer Vielzahl von Heizelementen (30, 32) zum Erwärmen der Folienbahn (6), wobei die Heizvorrichtung (10) bezüglich der Förderrichtung (F) stromaufwärts von der Formvorrichtung (8) angeordnet ist,
d) Anordnen eines Abschnitts der Folienbahn (6) im Bereich der Heizvorrichtung (10) und Betätigen der Heizvorrichtung (10) zum Erwärmen des Abschnitts der Folienbahn (6),
e) Anordnen des erwärmten Abschnitts der Folienbahn (6) in der Formvorrichtung (8) zwischen dem ersten und dem zweiten Formwerkzeug (12, 14) und Betätigen der Formvorrichtung (8), um das erste Formwerkzeug (12) und das zweite Formwerkzeug (14) in der Formposition anzuordnen,
f) Messen unter Verwendung der Vielzahl von Temperatursensoren (24) einer entsprechenden Vielzahl von Ist-Temperaturwerten (T_{IST}) des Abschnitts der Folienbahn (6) und Vergleichen der Ist-Temperaturwerte (T_{IST}) mit einem Soll-Temperaturwert (T_{SOLL}), wobei die Messung der Ist-Temperaturwerte (T_{IST}) erfolgt, wenn das erste Formwerkzeug (12) und das zweite Formwerkzeug (14) in der Formposition angeordnet sind, und
g) Nachregeln der Heizleistung mindestens eines der Vielzahl von Heizelementen (30, 32), wenn in dem Schritt f) eine Abweichung eines oder mehrerer gemessener Ist-Temperaturwerte (T_{IST}) vom Soll-Temperaturwert (T_{SOLL}) festgestellt wurde.

2. Verfahren nach Anspruch 1, **dadurch gekennzeichnet, dass** die Schritte d) bis g) mit jeweils einem weiteren Abschnitt der Folienbahn (6) so oft wiederholt werden, bis in dem Schritt f) festgestellt wird, dass alle Temperatursensoren (24) den Soll-Temperaturwert (T_{SOLL}) messen.

3. Verfahren nach Anspruch 1 oder 2, **dadurch gekennzeichnet, dass** das Nachregeln der Heizleistung des mindestens einen der Vielzahl von Heizelementen (30, 32) automatisch erfolgt.

4. Verfahren nach einem der vorhergehenden Ansprüche, **dadurch gekennzeichnet, dass** der Abschnitt der Folienbahn (6) abgekühlt wird, wenn das erste und das zweite Formwerkzeug (12, 14) in der Formposition angeordnet sind.

5. Verfahren nach einem der vorhergehenden Ansprüche, **dadurch gekennzeichnet, dass** nach dem Anordnen des ersten und des zweiten Formwerkzeugs (12, 14) in der Formposition zunächst die Messung der Ist-Temperaturwerte (T_{IST}) durch die Vielzahl von Temperatursensoren (24) erfolgt und anschließend die Drucklufteinrichtung (23) betätigt wird.

6. Verfahren nach einem der vorhergehenden Ansprüche, **dadurch gekennzeichnet, dass** die Heizvorrichtung (10) eine erste und eine zweite Heizplatte (26, 28) umfasst, wobei die Folienbahn (6) zwischen der ersten Heizplatte (26) und der zweiten Heizplatte (28) in Förderrichtung (F) geführt wird.

7. Verfahren nach Anspruch 6, **dadurch gekennzeichnet, dass** die Vielzahl von Heizelementen (30, 32) in der ersten und/oder der zweiten Heizplatte (26, 28) vorgesehen ist.

8. Verfahren nach Anspruch 7, **dadurch gekennzeichnet, dass** jedem Temperatursensor (24) mindestens ein Heizelement (30, 32) oder eine Gruppe von Heizelementen (30, 32) zugeordnet ist, wobei jeder Temperatursensor (24) in einem Bereich des ersten oder des zweiten Formwerkzeugs (12, 14) angeordnet ist, dessen relative Lage innerhalb des ersten oder zweiten Formwerkzeugs (12, 14) im Wesentlichen der relativen Lage desjenigen Bereichs innerhalb der ersten und/oder zweiten Heizplatte (26, 28) entspricht, in dem das mindestens eine zugeordnete Heizelement (30, 32) oder die zugeordnete Gruppe von Heizelementen (30, 32) angeordnet ist.

9. Verfahren nach einem der vorhergehenden Ansprüche, **dadurch gekennzeichnet, dass** die Vielzahl von Temperatursensoren (24) in einer Vielzahl von Ausnehmungen in dem ersten oder dem zweiten Formwerkzeug (12, 14) angeordnet ist, wobei die Vielzahl von Ausnehmungen in einer Fläche des ersten oder des zweiten Formwerkzeugs (12, 14) ausgebildet ist, die dem jeweils anderen Formwerkzeug (14, 12) gegenüberliegt.

10. Verfahren nach einem der vorhergehenden Ansprüche, **dadurch gekennzeichnet, dass** jeder der Vielzahl von Temperatursensoren (24) ein berührungslos messender Temperatursensor ist.

11. Verfahren nach einem der vorhergehenden Ansprüche, **dadurch gekennzeichnet, dass** die Temperatursensoren (24) in seitlichen Randabschnitten (42, 44) des ersten oder zweiten Formwerkzeugs (12, 14) angeordnet sind.

12. Verfahren nach einem der Ansprüche 1 bis 10, **dadurch gekennzeichnet, dass** die Temperatursensoren (24) mindestens in den Eckbereichen des ersten oder zweiten Formwerkzeugs (12, 14) angeordnet sind.

13. Verfahren nach einem der vorhergehenden Ansprüche, **dadurch gekennzeichnet, dass** zusätzlich
- aus dem Soll-Temperaturwert (T_{SOLL}) und den gemessenen Ist-Temperaturwerten (T_{IST}) ein Abweichungsmuster abgeleitet wird, und
- ein Nachregeln der Heizleistung mindestens eines der Vielzahl von Heizelementen (30, 32) unter Verwendung von in einer Datenbank abgelegten Informationen zur Behebung des Abweichungsmusters erfolgt.

14. Verfahren nach einem der vorhergehenden Ansprüche, **dadurch gekennzeichnet, dass** zusätzlich
- unter Verwendung der Vielzahl von Temperatursensoren (24) ein zeitlicher Ist-Temperaturverlauf des Abkühlvorgangs des erwärmten Abschnitts der Folie (6) ermittelt wird, wenn das erste Formwerkzeug (12) und das zweite Formwerkzeug (14) in der Formposition angeordnet sind,
- als letzter Ist-Temperaturwert (T_{IST}) des Ist-Temperaturverlaufs derjenige Temperaturwert ermittelt wird, der zum Zeitpunkt des Freigebens des Abschnitts der Folienbahn (6) durch das erste Formwerkzeug (12) und das zweite Formwerkzeug (14) gemessen wird, und,
- wenn der letzte gemessene Ist-Temperaturwert (T_{IST}) höher als ein vorbestimmter Grenztemperaturwert (T_{G}) ist, festgestellt wird, dass der Abschnitt der Folienbahn (6) zu früh durch das erste Formwerkzeug (12) und das zweite Formwerkzeug (14) freigegeben wurde.

## Claims

1. Method of forming blisters (4) in a film web (6), which is moved intermittently in a conveying direction (F), the method comprising the following steps:
a) providing a moulding device (8) comprising a first moulding tool (12) and a second moulding tool (14), which has a multiplicity of mould recesses (20), wherein the first and the second forming tool (12, 14) clamp a portion of the film web (6) between them in a moulding position, wherein the moulding device (8) also comprises a compressed air device (23), which is actuated to form the blisters (4) when the first moulding tool (12) and the second moulding tool (14) are arranged in the moulding position,
b) providing a multiplicity of temperature sensors (24), which are integrated in the first or the second moulding tool (12, 14),
c) providing a heating device (10) comprising a multiplicity of heating elements (30, 32) for heating the film web (6), wherein the heating device (10) is arranged upstream of the moulding device (8) with respect to the conveying direction (F),
d) arranging a portion of the film web (6) in the region of the heating device (10) and actuating the heating device (10) to heat the portion of the film web (6),
e) arranging the heated portion of the film web (6) in the moulding device (8) between the first and the second moulding tool (12, 14) and actuating the moulding device (8), in order to arrange the first moulding tool (12) and the second moulding tool (14) in the moulding position,
f) using the multiplicity of temperature sensors (24) for measuring a corresponding multiplicity of actual temperature values (T_{IST}) of the portion of the film web (6) and comparing the actual temperature values (T_{IST}) with a setpoint temperature value (T_{SOLL}), wherein the measuring of the actual temperature values (T_{IST}) is performed when the first moulding tool (12) and the second moulding tool (14) are arranged in the moulding position, and
g) adjusting the heating output of at least one of the multiplicity of heating elements (30, 32) if a deviation of one or more measured actual temperature values (T_{IST}) from the setpoint temperature value (T_{SOLL}) has been established in step f).

2. Method according to Claim 1, **characterized in that** steps d) to g) are repeated with a further portion of the film web (6) in each case until it is established in step f) that all of the temperature sensors (24) measure the setpoint temperature value (T_{SOLL}).

3. Method according to Claim 1 or 2, **characterized in that** the adjustment of the heating output of the at least one of the multiplicity of heating elements (30, 32) is performed automatically.

4. Method according to one of the preceding claims, **characterized in that** the portion of the film web (6) is cooled down when the first and the second moulding tool (12, 14) are arranged in the moulding position.

5. Method according to one of the preceding claims, **characterized in that**, after arranging the first and the second moulding tool (12, 14) in the moulding position, first the measuring of the actual temperature values (T_{IST}) is performed by the multiplicity of temperature sensors (24) and then the compressed air device (23) is actuated.

6. Method according to one of the preceding claims, **characterized in that** the heating device (10) comprises a first and a second heating plate (26, 28), wherein the film web (6) is passed between the first heating plate (26) and the second heating plate (28) in the conveying direction (F).

7. Method according to Claim 6, **characterized in that** the multiplicity of heating elements (30, 32) are provided in the first and/or the second heating plate (26, 28).

8. Method according to Claim 7, **characterized in that** each temperature sensor (24) is assigned at least one heating element (30, 32) or a group of heating elements (30, 32), wherein each temperature sensor (24) is arranged in a region of the first or the second moulding tool (12, 14) of which the relative position within the first or second moulding tool (12, 14) corresponds substantially to the relative position of that region within the first and/or second heating plate (26, 28) in which the at least one assigned heating element (30, 32) or the assigned group of heating elements (30, 32) is arranged.

9. Method according to one of the preceding claims, **characterized in that** the multiplicity of temperature sensors (24) are arranged in a multiplicity of recesses in the first or the second moulding tool (12, 14), wherein the multiplicity of recesses are formed in a surface of the first or the second moulding tool (12, 14) that lies opposite the other moulding tool (14, 12) respectively.

10. Method according to one of the preceding claims, **characterized in that** each of the multiplicity of temperature sensors (24) is a contactlessly measuring temperature sensor.

11. Method according to one of the preceding claims, **characterized in that** the temperature sensors (24) are arranged in lateral edge portions (42, 44) of the first or second moulding tool (12, 14).

12. Method according to one of Claims 1 to 10, **characterized in that** the temperature sensors (24) are arranged at least in the corner regions of the first or second moulding tool (12, 14).

13. Method according to one of the preceding claims, **characterized in that** in addition
- a pattern of deviations is derived from the setpoint temperature value (T_{SOLL}) and the measured actual temperature values (T_{IST}), and
- an adjustment of the heating output of at least one of the multiplicity of heating elements (30, 32) is performed using information stored in a database concerning eliminating the pattern of deviations.

14. Method according to one of the preceding claims, **characterized in that** in addition
- using the multiplicity of temperature sensors (24), a temperature profile of the variation over time of the actual temperature in the process of cooling down the heated portion of the film (6) is determined when the first moulding tool (12) and the second moulding tool (14) are arranged in the moulding position,
- the temperature value that is measured at the time when the portion of the film web (6) is released by the first moulding tool (12) and the second moulding tool (14) is determined as the last actual temperature value (T_{IST}) of the actual temperature profile, and
- if the last measured actual temperature value (T_{IST}) is higher than a predetermined limiting temperature value (T_{G}), it is established that the portion of the film web (6) was released too early by the first moulding tool (12) and the second moulding tool (14).

## Revendications

1. Procédé pour former des écuelles (4) dans une bande de film (6), qui est déplacée de manière cadencée dans une direction de convoyage (F), dans lequel le procédé présente des étapes suivantes :
a) de fourniture d'un dispositif de moulage (8) avec un premier outil de moulage (12) et un deuxième outil de moulage (14), qui présente une pluralité d'évidements de moulage (20), dans lequel le premier et le deuxième outil de moulage (12, 14) enserrent entre eux un tronçon de la bande de film (6) dans une position de moulage, dans lequel le dispositif de moulage (8) présente par ailleurs un système à air comprimé (23), qui est actionné pour former les écuelles (4) quand le premier outil de moulage (12) et le deuxième outil de moulage (14) sont disposés dans la position de moulage,
b) de fourniture d'une pluralité de capteurs de température (24), qui sont intégrés dans le premier ou le deuxième outil de moulage (12, 14),
c) de fourniture d'un dispositif de chauffage (10) avec une pluralité d'éléments de chauffage (30, 32) pour réchauffer la bande de film (6), dans lequel le dispositif de chauffage (10) est disposé par rapport à la direction de convoyage (F) en amont du dispositif de moulage (8),
d) d'agencement d'un tronçon de la bande de film (6) dans la zone du dispositif de chauffage (10) et d'actionnement du dispositif de chauffage (10) pour réchauffer le tronçon de la bande de film (6),
e) d'agencement du tronçon réchauffé de la bande de film (6) dans le dispositif de moulage (8) entre le premier et le deuxième outil de moulage (12, 14) et d'actionnement du dispositif de moulage (8) afin d'agencer le premier outil de moulage (12) et le deuxième outil de moulage (14) dans la position de moulage,
f) de mesure en utilisant la pluralité de capteurs de température (24) d'une pluralité correspondante de valeurs de température réelles (T_{réelle}) du tronçon de la bande de film (6) et de comparaison des valeurs de température réelles (T_{réelle}) à une valeur de température théorique (T_{théorique}), dans lequel la mesure des valeurs de température réelles (T_{réelle}) est effectuée quand le premier outil de moulage (12) et le deuxième outil de moulage (14) sont agencés dans la position de moulage, et
g) de régulation ultérieure de la puissance de chauffage d'au moins un de la pluralité d'éléments de chauffage (30, 32) quand un écart entre une ou plusieurs valeurs de température réelles (T_{réelle}) mesurées et la valeur de température théorique (T_{théorique}) a été constaté à l'étape f) .

2. Procédé selon la revendication 1, **caractérisé en ce que** les étapes d) à g) sont répétées avec respectivement un autre tronçon de la bande de film (6) aussi souvent jusqu'à ce qu'il soit constaté à l'étape f) que tous les capteurs de température (24) mesurent la valeur de température théorique (T_{théorique}).

3. Procédé selon la revendication 1 ou 2, **caractérisé en ce que** la régulation ultérieure de la puissance de chauffage de l'au moins un de la pluralité d'éléments de chauffage (30, 32) est effectuée de manière automatique.

4. Procédé selon l'une quelconque des revendications précédentes, **caractérisé en ce que** le tronçon de la bande de film (6) est refroidi quand le premier et le deuxième outil de moulage (12, 14) sont agencés dans la position de moulage.

5. Procédé selon l'une quelconque des revendications précédentes, **caractérisé en ce qu'**après l'agencement du premier et du deuxième outil de moulage (12, 14) dans la position de moulage, d'abord la mesure des valeurs de température réelles (T_{réelle}) est effectuée par la pluralité de capteurs de température (24) puis le système à air comprimé (23) est actionné.

6. Procédé selon l'une quelconque des revendications précédentes, **caractérisé en ce que** le dispositif de chauffage (10) comprend une première et une deuxième plaque de chauffage (26, 28), dans lequel la bande de film (6) est guidée dans la direction de convoyage (F) entre la première plaque de chauffage (26) et la deuxième plaque de chauffage (28).

7. Procédé selon la revendication 6, **caractérisé en ce que** la pluralité d'éléments de chauffage (30, 32) est prévue dans la première et/ou la deuxième plaque de chauffage (26, 28).

8. Procédé selon la revendication 7, **caractérisé en ce qu'**au moins un élément de chauffage (30, 32) ou un groupe d'éléments de chauffage (30, 32) est associé à chaque capteur de température (24), dans lequel chaque capteur de température (24) est agencé dans une zone du premier ou du deuxième outil de moulage (12, 14), dont la position relative à l'intérieur du premier ou du deuxième outil de moulage (12, 14) correspond sensiblement à la position relative de la zone à l'intérieur de la première et/ou de la deuxième plaque de chauffage (26, 28), dans laquelle précisément l'au moins un élément de chauffage (30, 32) associé ou le groupe associé d'éléments de chauffage (30, 32) est agencé.

9. Procédé selon l'une quelconque des revendications précédentes, **caractérisé en ce que** la pluralité de capteurs de température (24) est agencée dans une pluralité d'évidements dans le premier ou le deuxième outil de moulage (12, 14), dans lequel la pluralité d'évidements est réalisée dans une surface du premier ou du deuxième outil de moulage (12, 14), qui fait face à l'autre outil de moulage (14, 12) respectif.

10. Procédé selon l'une quelconque des revendications précédentes, **caractérisé en ce qu'**un capteur de température de mesure sans contact est associé à chacun de la pluralité de capteurs de température (24).

11. Procédé selon l'une quelconque des revendications précédentes, **caractérisé en ce que** les capteurs de température (24) sont agencés dans des tronçons de bord (42, 44) latéraux du premier ou du deuxième outil de moulage (12, 14).

12. Procédé selon l'une quelconque des revendications 1 à 10, **caractérisé en ce que** les capteurs de température (24) sont agencés au moins dans les zones de coin du premier ou du deuxième outil de moulage (12, 14).

13. Procédé selon l'une quelconque des revendications précédentes, **caractérisé en ce qu'**en supplément
- un modèle d'écart est déduit de la valeur de température théorique (T_{théorique})et des valeurs de température réelles (T_{réelle}) mesurées et
- une régulation ultérieure de la puissance de chauffage d'au moins un de la pluralité d'éléments de chauffage (30, 32) est effectuée en utilisant des informations sauvegardées dans une base de données pour supprimer le modèle d'écart.

14. Procédé selon l'une quelconque des revendications précédentes, **caractérisé en ce qu'**en supplément
- une variation de température réelle dans le temps de l'opération de refroidissement du tronçon réchauffé du film (6) est déterminée en utilisant la pluralité de capteurs de température (24) quand le premier outil de moulage (12) et le deuxième outil de moulage (14) sont agencés dans la position de moulage,
- la valeur de température est déterminée en tant que dernière valeur de température réelle (T_{réelle}) de la variation de température réelle, laquelle précisément est mesurée au moment de la libération du tronçon de la bande de film (6) par le premier outil de moulage (12) et le deuxième outil de moulage (14)et
- quand la dernière valeur de température réelle (T_{réelle}) mesurée est supérieure à une valeur de température limite (T_{G}) prédéfinie, il est constaté que le tronçon de la bande de film (6) a été libéré trop tôt par le premier outil de moulage (12) et le deuxième outil de moulage (14).
